# EUROPEAN PATENT APPLICATION

(11) **EP 4 116 595 A1**
(43) Date of publication of application: **11.01.2023**
(21) Application number: 21764324.6
(22) Date of filing: 03.03.2021
(51) Int. Cl.: F16C 19/46, F16C 19/48, F16C 33/34, F16C 33/46, F16C 33/48, F16C 33/56, F16C 33/58

(54) **CAGE AND ROLLER**

(30) Priority: 06.03.2020 JP 2020038707
(71) Applicant: NSK Ltd., Tokyo 141-8560 (JP)
(72) Inventor: MATSUMOTO, Sou, Takasaki-shi, Gunma 370-3344 (JP); KUMAGAI, Hirofumi, Takasaki-shi, Gunma 370-3344 (JP)
(74) Representative: Grünecker Patent- und Rechtsanwälte PartG mbB
(86) International application number: PCT/JP2021/008244
(87) International publication number: WO 2021/177366

(57) **Abstract**

A cage and roller includes a plurality of rollers arranged in a cylindrical shape; a pair of annular plates disposed on both axial sides of the plurality of rollers and holding the plurality of rollers; and a plurality of column portions connecting the pair of annular plates. Protrusion portions protruding in an axial direction are formed on both axial end surfaces of each of the plurality of rollers. A plurality of hole portions with which the protrusion portions of the plurality of rollers are engaged are formed in the pair of annular plates. The pair of annular plates rotatably hold the plurality of rollers in a non-contact state with each other.

## Description

### TECHNICAL FIELD

The present invention relates to a cage and roller to be mounted on, for example, a transmission gear support portion and a shaft support portion of a vehicle, a roller follower for an engine, a roller follower for a fuel pump, or the like.

### BACKGROUND ART

In recent years, radial needle bearings have been widely used in rotating parts of various industrial machines, gearboxes (transmissions) of automobiles, and the like. For example, as a radial needle bearing to be used in a transmission, a bearing which can be used under severe conditions is required along with an increase in output and speed up of an automobile.

For example, Patent Literatures 1 to 3 disclose a retainer including column portions in a gap on an outer diameter side or an inner diameter side of a roller pitch circle diameter, and the column portions are between a plurality of rollers arranged in a cylindrical shape. In the roller bearings using these retainers, the number of rollers close to a total number of rollers in a roller bearing having no retainer can be inserted while preventing the rollers from coming into contact with each other, and a load capacity can be increased.

Further, Patent Literature 4 proposes a cage and roller in which column portions are formed on an outer ring raceway surface side of a retainer, and a plurality of rollers are disposed in a pocket portion between adjacent column portions. In the above cage and roller, since roller falling prevention columns are formed in a gap between two adjacent rollers in one pocket and the outer ring raceway surface, the rollers can be prevented from falling out of the retainer and a high load capacity can be realized.

### CITATION LIST

### PATENT LITERATURE

Patent Literature 1: Japanese Patent No. 4618915
Patent Literature 2: JP-A-2007-187287
Patent Literature 3: JP-A-2013-185640
Patent Literature 4: JP-A-2016-156472

### SUMMARY OF INVENTION

### TECHNICAL PROBLEM

However, when the roller bearing described in Patent Literatures 1 to 3 is applied to a small component such as a tappet roller, since a diameter of the roller is small, a gap between the roller and the outer ring raceway surface or inner ring raceway surface is extremely small, and it is difficult to form a column in the gap. In addition, when the column is formed to be thin in order to dispose the column in the gap, it is difficult to secure the strength of the retainer. Further, in the roller bearing described in Patent Literatures 1 to 3, the rollers do not contact each other, but the rollers rotate in a state where rolling surfaces of the rollers and the columns are in contact with each other, so that friction occurs between the rollers and the columns, and the bearing torque may increase.

Further, in the cage and roller described in Patent Literature 4, the rollers can be prevented from falling off to the outer diameter side, but a roller falling prevention tool is also required to prevent the rollers from falling off to the inner diameter side during shipment or the like, so that the cost is increased due to an increase in the number of components. Further, in the cage and roller, since the rollers are in contact with each other in one pocket during rolling, there are concerns about an increase in bearing torque, seizure of the rollers, and a decrease in allowable rotational speed.

The present invention has been made in view of the above problems, and an object of the present invention is to provide a cage and roller capable of increasing a load capacity while restricting an increase in bearing torque.

### SOLUTION TO PROBLEM

The object of the present invention is achieved by the following configuration.

A cage and roller includes:
a plurality of rollers arranged in a cylindrical shape; and
a pair of annular plates disposed on both axial sides of the plurality of rollers to hold the plurality of rollers, in which:
   the plurality of rollers have protrusion portions on both axial end surfaces thereof; and
   the pair of annular plates have a plurality of hole portions with which the protrusion portions of the plurality of rollers are engaged, and rotatably hold the plurality of rollers in a non-contact state with each other.

### ADVANTAGEOUS EFFECTS OF INVENTION

According to the present invention, since the protrusion portions formed on both end surfaces of the rollers are engaged with the hole portions formed in the pair of annular plates, and the plurality of rollers are rotatably held in a non-contact state with each other by the pair of annular plates, a load capacity can be increased while restricting an increase in bearing torque.

### BRIEF DESCRIPTION OF DRAWINGS

FIG. 1 is a perspective view illustrating a cage and roller according to a first embodiment of the present invention.
FIG. 2 is a developed view of the cage and roller of FIG. 1 as viewed from an outer circumferential surface side.
FIG. 3 is a cross-sectional view taken along line III-III of FIG. 2.
FIG. 4 is an enlarged cross-sectional view illustrating a part of a cage and roller according to a second embodiment of the present invention.
FIG. 5 is an enlarged cross-sectional view illustrating a part of a cage and roller according to a third embodiment of the present invention.
FIG. 6 is an enlarged cross-sectional view illustrating a part of a cage and roller according to a fourth embodiment of the present invention.
FIG. 7 is an enlarged cross-sectional view illustrating a part of a cage and roller according to a fifth embodiment of the present invention.
FIG. 8 is a developed view of a cage and roller according to a sixth embodiment of the present invention as viewed from an outer circumferential surface side.
FIG. 9 is a cross-sectional view illustrating a cage and roller according to a seventh embodiment of the present invention.

### DESCRIPTION OF EMBODIMENTS

Hereinafter, a cage and roller according to the present invention will be described in detail with reference to the drawings. The present invention is not limited to the embodiments to be described below, and can be appropriately modified without departing from the gist of the present invention.

### (First Embodiment)

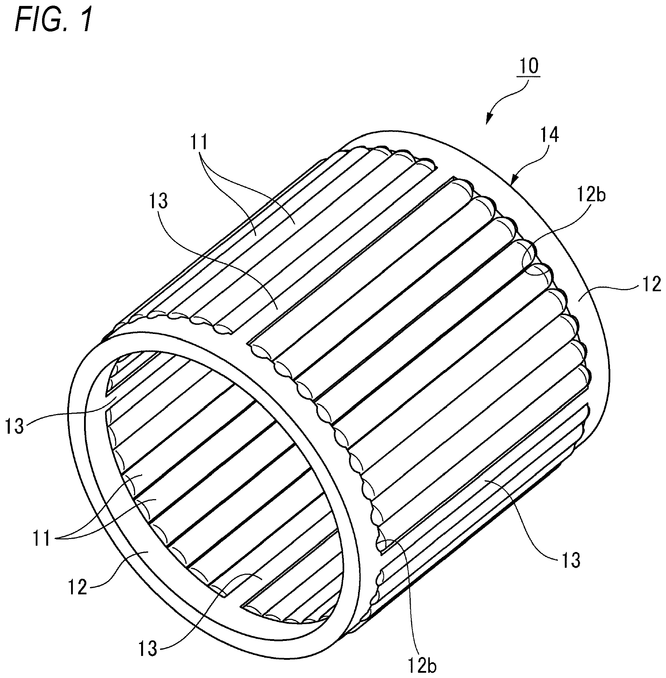

First, a cage and roller 10 according to a first embodiment of the present invention will be described with reference to FIGS. 1 to 3. In the following description, unless otherwise specified, an axial direction, a radial direction, a circumferential direction, an outer diameter side, and an inner diameter side indicate an axial direction, a radial direction, a circumferential direction, an outer diameter side, and an inner diameter side of the cylindrical cage and roller.

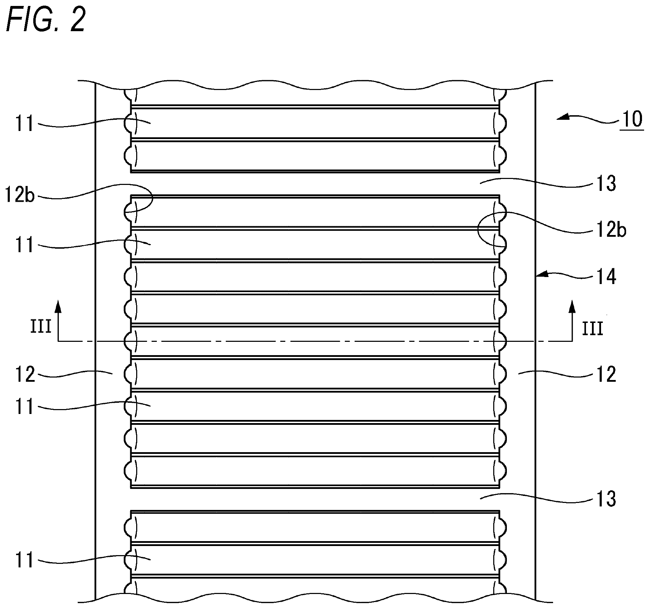

As illustrated in FIGS. 1 and 2, the cage and roller 10 of the present embodiment includes a plurality of rollers 11 arranged in a cylindrical shape, a pair of annular plates 12 disposed on both axial sides of the plurality of rollers 11 and rotatably holding the plurality of rollers 11, and a plurality of (four in the present embodiment) column portions 13 connecting the pair of annular plates 12 in the axial direction.

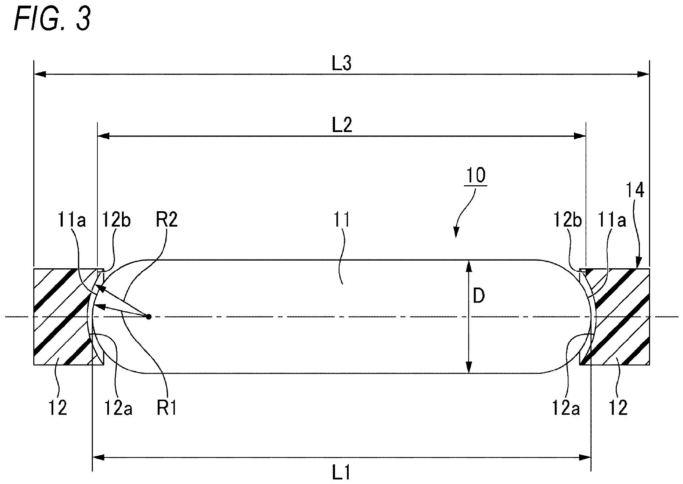

As illustrated in FIG. 3, protrusion portions 11a having a convex spherical shape protruding axially outward are respectively formed on both axial end surfaces of the roller 11. The protrusion portions 11a are formed by cutting both end portions of the columnar roller 11 or performing plastic working on the roller 11.

The pair of annular plates 12 are disposed so as to sandwich both axial end portions of the plurality of rollers 11, and the pair of annular plates 12 are coupled in the axial direction by the four column portions 13. That is, in the present embodiment, the annular plates 12 and the column portions 13 are integrally formed of synthetic resin to constitute a retainer 14. A radial thickness of the column portion 13 is the same as a radial thickness of the annular plate 12. An outer diameter surface of the column portion 13 is connected to be flush with an outer circumferential surface of the annular plate 12, and an inner diameter surface of the column portion 13 is connected to be flush with an inner circumferential surface of the annular plate 12. In the present embodiment, nine rollers 11 are arranged between the column portions 13 adjacent to each other in the circumferential direction. Further, the column portions 13 are configured such that the column portion 13 is not in contact with the roller 11. The number of column portions 13 is not limited to four, and may be two or more as long as the strength of the retainer 14 can be secured, and is 1/2 or less (preferably less than 1/3) of the number of rollers 11. In addition, it is preferable that the column portions 13 are arranged at substantially equal intervals in the circumferential direction, but the column portions 13 may not be arranged at substantially equal intervals.

A plurality of hole portions 12a with which the protrusion portions 11a of each of the rollers 11 are engaged are formed at substantially equal intervals in the circumferential direction in regions of axial inner end surfaces of the pair of annular plates 12 excluding the column portions 13. The hole portion 12a is formed in a concave spherical shape. Further, a circumferential interval between the hole portions 12a adjacent to each other in the circumferential direction is set to be slightly larger than a diameter D of the roller 11. Specifically, a slight gap exists in the circumferential direction between the protrusion portion 11a and the hole portion 12a, and the gap allows the roller 11 to be slightly displaced in the circumferential direction with respect to the hole portion 12a. The circumferential intervals of the hole portions 12a are set such that the rollers 11 displaced in the circumferential direction do not come into contact with each other. Therefore, the plurality of rollers 11 can be rotatably held in a non-contact state with each other by the plurality of hole portions 12a of the pair of annular plates 12. A radius of curvature R1 of the convex spherical surface of the protrusion portion 11a is set to be smaller than a radius of curvature R2 of the concave spherical surface of the hole portion 12a (R1<R2). A center of the convex spherical surface of the protrusion portion 11a is located on a rotation center axis (rotation axis) of the roller 11, and a center of the concave spherical surface of the hole portion 12a is located on a pitch circle diameter (PCD) of the plurality of rollers 11.

In addition, an insertion groove 12b for facilitating insertion of the roller 11 into the hole portion 12a is formed along the radial direction in an outer diameter-side end portion of each hole portion 12a. The insertion groove 12b is formed in a semi-cylindrical shape which is an arc shape when viewed from an outer diameter side, and is formed to have a depth shallower than that of the hole portion 12a. An axial distance L2 between the insertion grooves 12b is set to be smaller than an axial length L1 of the roller 11 (L2<L1). Further, the axial length L1 of the roller 11 is set to be smaller than an axial length L3 of the retainer 14 (L1<L3), and each hole portion 12a does not penetrate the annular plate 12 in the axial direction, so that the roller 11 is held inside the retainer 14. Therefore, the protrusion portion 11a which is the axial end portion of the roller 11 does not protrude from an axial outer end surface of the annular plate 12 (axial end portion of the retainer 14).

As described above, according to the cage and roller 10 of the present embodiment, since the protrusion portions 11a formed on both end surfaces of the rollers 11 and the hole portions 12a formed in the pair of annular plates 12 are engaged with each other, and the plurality of rollers 11 are rotatably held in a non-contact state with each other by the pair of annular plates 12, an increase in bearing torque of the cage and roller 10 can be restricted, and seizure of the rollers 11 and a decrease in allowable rotation speed can be prevented. In addition, since it is not necessary to provide the column portion between all adjacent rollers 11, the number of rollers 11 can be set to be close to the total number of rollers in a roller bearing, and a load capacity of the cage and roller 10 can be increased.

In addition, according to the cage and roller 10 of the present embodiment, since the plurality of rollers 11 are held by the retainer 14 by engaging the protrusion portions 11a of the rollers 11 with the hole portions 12a of the pair of annular plates 12, the rollers 11 can be prevented from falling off from the retainer 14 without providing a roller falling prevention column or a roller falling prevention tool.

Further, according to the cage and roller 10 of the present embodiment, since the radius of curvature of the convex spherical surface of the protrusion portion 11a of the roller 11 is set to be smaller than the radius of curvature of the concave spherical surface of the hole portion 12a of the annular plate 12, the protrusion portion 11a and the hole portion 12a are in point contact with each other at one point. Therefore, frictional resistance between the rollers 11 and the annular plates 12 can be minimized, and the increase in bearing torque of the cage and roller 10 can be further prevented.

Further, according to the cage and roller 10 of the present embodiment, since the retainer 14 is formed of synthetic resin, the retainer 14 is elastically deformed when the rollers 11 are assembled into the retainer 14. Therefore, the rollers 11 can be easily assembled into the retainer 14, and the rollers 11 can be prevented from falling off after the assembling. In addition, since each hole portion 12a does not penetrate the annular plate 12 in the axial direction, a decrease in strength of the annular plate 12 can be prevented. Further, since the protrusion portion 11a does not protrude from the axial outer end surface of the annular plate 12 and the axial outer end surface of the annular plate 12 is formed in a planar shape, the rollers 11 and a part of the annular plate 12 are prevented from interfering with a member adjacent to the retainer 14 in the axial direction when the cage and roller 10 is used.

Further, according to the cage and roller 10 of the present embodiment, since the insertion groove 12b is formed in the outer diameter-side end portion of each hole portion 12a of the annular plate 12, an amount of elastic deformation of the annular plate 12 when the roller 11 is inserted is small, and the roller 11 is easily inserted into the hole portion 12a.

### (Second Embodiment)

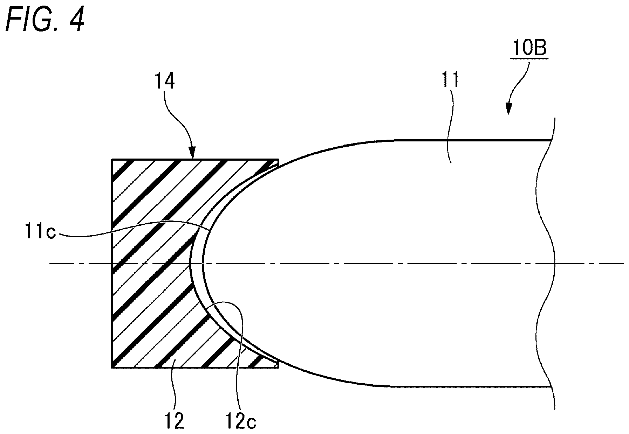

Next, a cage and roller 10B according to a second embodiment of the present invention will be described with reference to FIG. 4. In the second and subsequent third to sixth embodiments, the configuration of the retainer 14 and the relationship between the retainer 14 and the plurality of rollers 11 are the same as those in the first embodiment, so that the same components as those in the first embodiment are designated by the same reference numerals or equivalent reference numerals, and the description thereof will be omitted.

In the cage and roller 10B of the present embodiment, as illustrated in FIG. 4, protrusion portions 11c having an elliptical spherical shape and protruding axially outward are formed on both axial end surfaces of the roller 11, and hole portions 12c having an elliptical spherical shape and engaging with the protrusion portions 11c of the roller 11 are formed on axial inner end surfaces of the pair of annular plates 12. Major axes of both elliptical shapes of the hole portion 12c and the protrusion portion 11c are in the same direction as the axial direction of the roller 11, and the elliptical shape (minor axis) of the hole portion 12c is set to be smaller than the elliptical shape (minor axis) of the protrusion portion 11c. In the present embodiment, the insertion grooves 12b may also be formed in the annular plate 12 as in the first embodiment.

According to the cage and roller 10B of the present embodiment, since an engagement width in the axial direction between the protrusion portion 11c of the roller 11 and the hole portion 12c of the annular plate 12 is larger than that in the first embodiment, the rollers 11 can be further prevented from falling off from the retainer 14.

Other configurations, operations, and effects are the same as those of the first embodiment.

### (Third Embodiment)

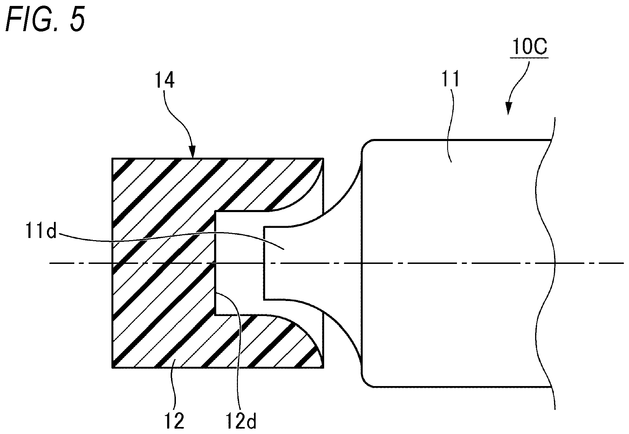

Next, a cage and roller 10C according to the third embodiment of the present invention will be described with reference to FIG. 5.

In the cage and roller 10C of the present embodiment, as illustrated in FIG. 5, substantially truncated conical protrusion portions 11d protruding axially outward are formed on both axial end surfaces of the roller 11, and substantially truncated conical hole portions 12d with which the protrusion portions 11d of the roller 11 are engaged are formed on axial inner end surfaces of the pair of annular plates 12. Further, in order to facilitate assembling of the roller 11 into the retainer 14, it is preferable to provide a predetermined gap (play) between a tip end of the protrusion portion 11d and a bottom surface of the hole portion 12d. In the present embodiment, the insertion grooves 12b may also be formed in the annular plate 12 as in the first embodiment.

According to the cage and roller 10C of the present embodiment, since an engagement width in the axial direction between the protrusion portion 11d of the roller 11 and the hole portion 12d of the annular plate 12 is larger than that in the first embodiment, the rollers 11 can be further prevented from falling off from the retainer 14.

Other configurations, operations, and effects are the same as those of the first embodiment.

### (Fourth Embodiment)

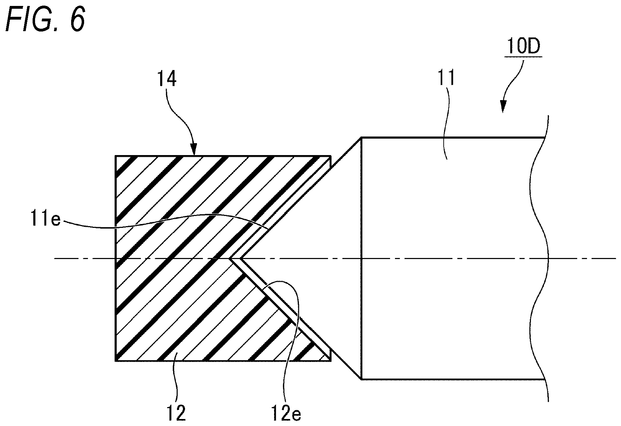

Next, a cage and roller 10D according to the fourth embodiment of the present invention will be described with reference to FIG. 6.

In the cage and roller 10D of the present embodiment, as illustrated in FIG. 6, tapered protrusion portions 11e protruding axially outward are formed on both axial end surfaces of the roller 11, and tapered hole portions 12e with which the protrusion portions 11e of the roller 11 are engaged are formed on axial inner end surfaces of the pair of annular plates 12. In the present embodiment, the insertion grooves 12b may also be formed in the annular plate 12 as in the first embodiment.

According to the cage and roller 10D of the present embodiment, since an engagement width in the axial direction between the protrusion portion 11e of the roller 11 and the hole portion 12e of the annular plate 12 is larger than that in the first embodiment, the rollers 11 can be further prevented from falling off from the retainer 14.

Other configurations, operations, and effects are the same as those of the first embodiment.

### (Fifth Embodiment)

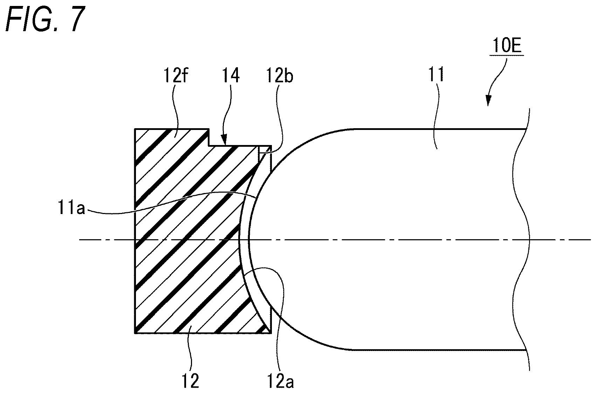

Next, a cage and roller 10E according to the fifth embodiment of the present invention will be described with reference to FIG. 7.

In the cage and roller 10E of the present embodiment, as illustrated in FIG. 7, ribs 12f protruding radially outward are formed on outer circumferential surfaces of the pair of annular plates 12 over the entire circumference. Further, the retainer 14 is used for outer ring guide with outer peripheral surfaces of the ribs 12f facing an outer ring raceway surface with a slight gap therebetween.

According to the cage and roller 10E of the present embodiment, since the ribs 12f protruding radially outward are formed on the outer circumferential surfaces of the pair of annular plates 12, rattling of the retainer 14 in the radial direction can be prevented. Accordingly, the rollers 11 can be further prevented from falling off from the retainer 14.

Other configurations, operations, and effects are the same as those of the first embodiment.

### (Sixth Embodiment)

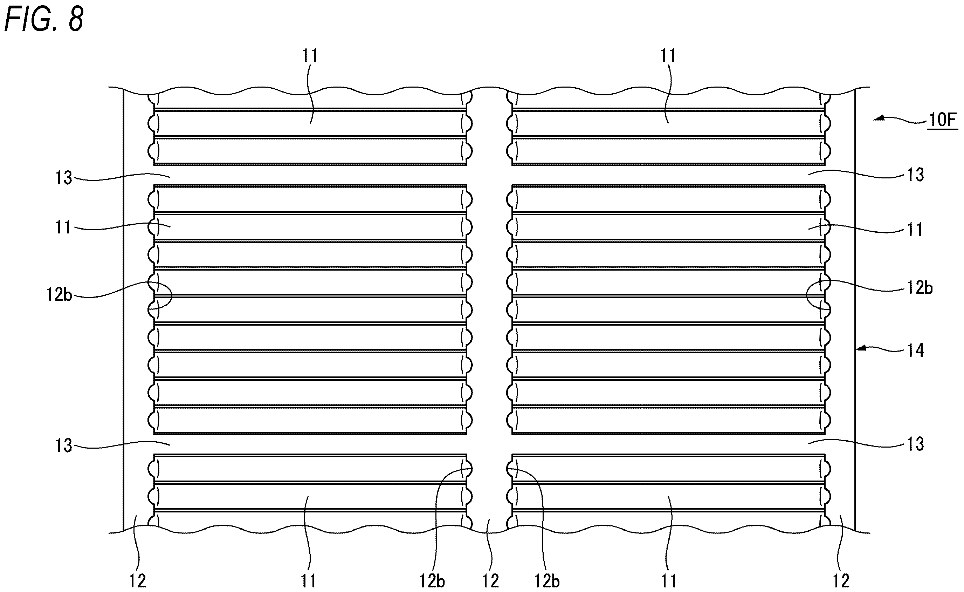

Next, a cage and roller 10F according to the sixth embodiment of the present invention will be described with reference to FIG. 8.

As illustrated in FIG. 8, the cage and roller 10F of the present embodiment includes two rows of the rollers 11 of the cage and roller 10 of the first embodiment. The number of rows of the rollers 11 is not limited to two, and may be three or more.

Other configurations, operations, and effects are the same as those of the first embodiment.

### (Seventh Embodiment)

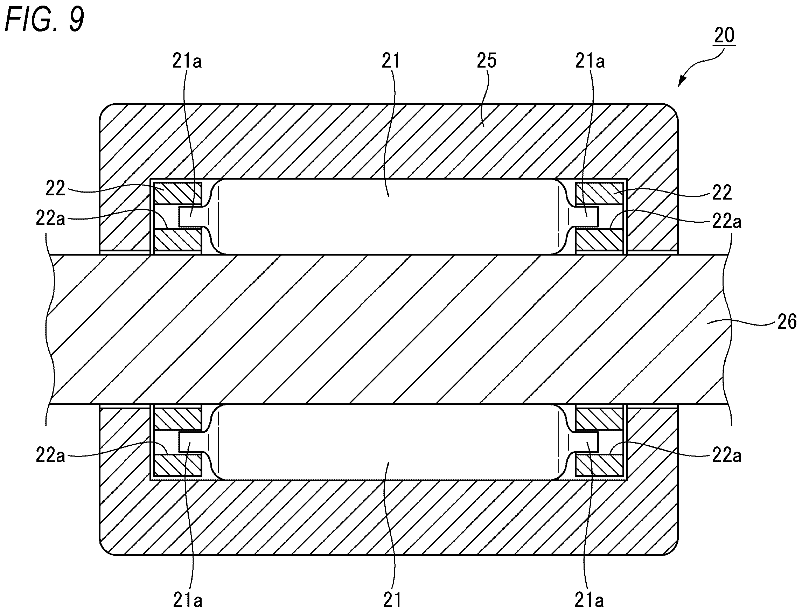

Next, a cage and roller 20 according to a seventh embodiment of the present invention will be described with reference to FIG. 9.

As illustrated in FIG. 9, the cage and roller 20 of the present embodiment includes a plurality of rollers 21 arranged in a cylindrical shape, and a pair of annular plates 22 disposed on both axial sides of the plurality of rollers 21 and rotatably holding the plurality of rollers 21.

As illustrated in FIG. 9, columnar protrusion portions 21a protruding axially outward are formed on both axial end surfaces of the roller 21. The protrusion portions 21a are formed at axial center positions of the roller 21. The protrusion portions 21a are formed integrally with the roller 21 by cutting both end portions of the columnar roller 21 or performing plastic working on the roller 21.

The pair of annular plates 22 are formed separately from each other, and are disposed so as to sandwich both axial end portions of the plurality of rollers 21. That is, column portions which connect the pair of annular plates 22 to each other in the axial direction are not provided for the pair of annular plates 22. The annular plate 22 may be made of metal or synthetic resin.

In the pair of annular plates 22, a plurality of hole portions 22a engaged with the protrusion portions 21a of each roller 21 are formed at substantially equal intervals in the circumferential direction. The hole portion 22a is a through hole penetrating the annular plate 22 in the axial direction. Further, a circumferential interval between the hole portions 22a adjacent to each other in the circumferential direction is set to be slightly larger than a diameter of the roller 21. Therefore, the plurality of rollers 21 can be rotatably held in a non-contact state with each other by the plurality of hole portions 22a of the pair of annular plates 22.

In addition, since the cage and roller 20 of the present embodiment does not include the column portions which connect the pair of annular plates 22, the cage and roller 20 is assembled into a drawn cup 25 after the plurality of rollers 21 and the pair of annular plates 22 are combined. At the time of use, a shaft 26 is inserted into the cage and roller 20. Since an axial dimension of the protrusion portion 21a is set to be smaller than an axial dimension of the hole portion 22a (the same as the axial dimension of the annular plate 22), the protrusion portion 21a is prevented from protruding from an axial outer end surface of the annular plate 22 and from coming into contact with the drawn cup 25.

As described above, according to the cage and roller 20 of the present embodiment, the protrusion portions 21a formed on both end surfaces of the roller 21 and the hole portions 22a formed in the pair of annular plates 22 are engaged with each other, and the plurality of rollers 21 are rotatably held in a non-contact state with each other by the pair of annular plates 22, so that an increase in bearing torque of the cage and roller 20 can be restricted, and seizure of the rollers 21 and a decrease in allowable rotation speed can be prevented. In addition, since it is not necessary to provide column portions which connect the pair of annular plates 22, the number of rollers 21 can be set to be close to a total number of rollers in a roller bearing, and a load capacity of the cage and roller 20 can be increased.

As described above, the present description discloses the following matters.
(1) A cage and roller includes:
   a plurality of rollers arranged in a cylindrical shape; and
   a pair of annular plates disposed on both axial sides of the plurality of rollers to hold the plurality of rollers, in which:
      the plurality of rollers have protrusion portions on both axial end surfaces thereof; and
      the pair of annular plates have a plurality of hole portions with which the protrusion portions of the plurality of rollers are engaged, and rotatably hold the plurality of rollers in a non-contact state with each other.
(2) The cage and roller according to (1) further includes two or more column portions connecting the pair of annular plates, and at least two of the rollers are arranged between the column portions adjacent to each other in a circumferential direction.
(3) In the cage and roller according to (2), the annular plates and the column portions are made of resin, and
   an insertion groove for facilitating insertion of the rollers into the hole portions is formed along a radial direction in an outer diameter-side end portion of the hole portions.
(4) In the cage and roller according to (1), the pair of annular plates are separated from each other.
(5) In the cage and roller according to (4), the protrusion portions have columnar shape and are formed at an axial center position of the rollers, and
   the hole portions are through hole penetrating the annular plate in an axial direction.
(6) The cage and roller according to (4) or (5) is assembled in a drawn cup.

According to the configuration, the protrusion portions formed on the both end surfaces of the roller are engaged with the hole portions formed in the pair of annular plates, and the plurality of rollers are rotatably held in a non-contact state with each other by the pair of annular plates, so that a load capacity can be increased while restricting an increase in bearing torque.

Although various embodiments have been described above with reference to the drawings, it is needless to say that the present invention is not limited to such examples. It is apparent to those skilled in the art that various changes and modifications can be conceived within the scope of the claims, and it is also understood that such variations and modifications belong to the technical scope of the present invention. In addition, constituent elements in the embodiments described above may be combined freely within a range not departing from the spirit of the present invention.

The present application is based on Japanese patent application (Japanese Patent Application NO. 2020-38707) filed on Mar. 6, 2020, and the contents thereof are incorporated by reference in the present application.

### REFERENCE SIGNS LIST

10, 10B, 10C, 10D, 10E, 10F, 20: cage and roller
11, 21: roller
11a, 11c, 11d, 11e, 21a: protrusion portion
12, 22: annular plate
12a, 12c, 12d, 12e, 22a: hole portion
12b: insertion groove
12f: rib
13: column portion
14: retainer
25: drawn cup
26: shaft

## Claims

1. A cage and roller comprising:
a plurality of rollers arranged in a cylindrical shape; and
a pair of annular plates disposed on both axial sides of the plurality of rollers to hold the plurality of rollers, wherein:
the plurality of rollers have protrusion portions on both axial end surfaces thereof; and
the pair of annular plates have a plurality of hole portions with which the protrusion portions of the plurality of rollers are engaged, and rotatably hold the plurality of rollers in a non-contact state with each other.

2. The cage and roller according to claim 1 further comprising:
two or more column portions connecting the pair of annular plates, wherein
at least two of the rollers are arranged between the column portions adjacent to each other in a circumferential direction.

3. The cage and roller according to claim 2, wherein:
the annular plates and the column portions are made of resin; and
an insertion groove for facilitating insertion of the rollers into the hole portions is formed along a radial direction in an outer diameter-side end portion of the hole portions.

4. The cage and roller according to claim 1, wherein
the pair of annular plates are separated from each other.

5. The cage and roller according to claim 4, wherein:
the protrusion portions have columnar shape and are formed at an axial center position of the rollers; and
the hole portions are through hole penetrating the annular plate in an axial direction.

6. The cage and roller according to claim 4 or 5, wherein
the cage and roller is assembled in a drawn cup.
